# EUROPEAN PATENT APPLICATION

(11) **EP 4 145 325 A1**
(43) Date of publication of application: **08.03.2023**
(21) Application number: 21461584.1
(22) Date of filing: 06.09.2021
(51) Int. Cl.: G06F 21/85, G06F 21/60, G06F 21/76, G06F 21/74

(54) **CRYPTOGRAPHIC DEVICE, METHOD OF PERFORMING CRYPTOGRAPHIC OPERATION, AND COMPUTER PROGRAM PRODUCT**

(71) Applicant: ID Secure Spolka Z Ograniczona Opdowiedzialnoscia, 90-135 Lodz (PL)
(72) Inventor: Andrzejczak, Michal, 01-476 Warszawa (PL); Szczesniak, Tomasz, 01-922 Warszawa (PL); Szczepaniak, Ernest, 05-100 Nowy Dwor Mazowiecki (PL); Jakubowski, Krzysztof, 05-119 Legionowo (PL); Kordowski, Przemys aw, 05-119 Legionowo (PL)
(74) Representative: Bury, Marek

(57) **Abstract**

A cryptographic device comprising a control module (**121**) and connected thereto a communication interface (**115**) for communication with external devices, a secure memory (**122**), a cryptographic processor (**124**) and a user interface (**126**, **127**), according to invention has the communication interface (**115**) with a built-in server. The connection of the communication interface (**115**) with the control module (**121**) runs through the hardware operation filter (**125**) suitable for transmitting of only operation codes from a predefined set of operation codes, receiving of descriptions of arguments of operations corresponding to predefined descriptions, transmitting only arguments consistent with the adopted description. The invention further concerns a method of realization of cryptographic operation and a computer program product.

## Description

### Field of the invention

The invention concerns a cryptographic device, in particular for data signing, data encryption and decryption and realization of authentication protocols. The invention further concerns a method of realization of a cryptographic operation and a computer program product.

### State of the art

A significance of security methods and devices enabling transaction and documents authentication and encryption has been growing in recent years.

A specific group of devices includes hardware cryptocurrency wallets, whose operation can be roughly divided into stages: a issuing of a transaction on a computer, sending it to an authentication device; signing it by means of a device after confirming a displayed hash by the user, sending the signed transaction to the computer, placing it in a blockchain. A system, in which such device is used is a subject of the American patent US10735182.

Other example of a security device is a platform for a digital signature. In the platforms for the digital signature, a reader and a signature smart card are typically used.

In the publication WO2019129937 of the international patent application, a method for checking an integrity of an electronic device is disclosed, in particular a payment terminal, provided with at least one processor, a secure element suitable for data storage and management of data of public key receiver for verification of the digital signature. Means for data storage comprises a content which was previously authenticated and verifiable by the public key. According to the method, a command for checking the integrity results in the execution of the following subsequent steps: the processor of the device calls the secure element; in a response the secure element is sending a request to data storage means in order to receive the integral content of its memory, then the secured element executes on the content received from the memory of the means for data storage, an authenticity verification in order to verify, by means of the public key, that its content have not been modified up to time of its initial verification. When the verification of authentication succeeds, the device is treated as secure. The platforms for digital signatures are prone to be infected by a malicious code, with the danger that the content, on which actually the digital sign was performed, differs from the content presented to the user performing the signature.

From the publication WO2016171985 of the international patent application, techniques providing an isolation of trusted input/output devices are known, by means of a secure cryptoprocessor. Safe IO lines can be used for controlling of devices, which have higher requirements concerning integrality and for attesting readings from sensors. Extended policies of authorization can be used for enforcement of policies concerning interactions with the IO devices. In the secure cryptographic processor, also a bus master controller can be provided. Particular devices on the isolated bus Secure Crypto-Processor can be mapped onto indices, so that read and write operations can be associated with authorization rules enforced by Secure-Crypto-Processor. Secure-Crypto-Processor may furthermore provide means for certifying of submitted data read from the input/output device, which can be signed by a device identity in order to demonstrate of strong evidence of origin of this data.

Cryptographic devices known in the state-of-the-art are universal, but they are prone to attacks when connected to the external user equipment such as smartphones or personal computers. Devices, which are more secure are dedicated to one function and one security method and they do not provide flexibility. It is an important problem.

### Summary of the invention

The invention concerns a solution to a problem of providing a security platform connectable to the external user equipment, enabling signing documents by various techniques and by means of various applications. Additional problem is to provide the possibility of realization with the use of generally available sub-assemblies and elastic client-server configuration with providing simultaneously insensitivity for attacks carried out by a malicious code run on the external user equipment and resistance to hardware Trojans.

A cryptographic device comprising a control module and connected to it a communication interface for communication with external user equipment, a secure memory, a cryptographic processor and a user interface, according to the invention is characterized in that the communication interface includes a built-in server, whereas a connection of the communication interface with the control module runs through a hardware operation filter suitable for transmitting of only operation codes from predefined set of operation codes, receiving of descriptions of arguments of operations corresponding to predefined descriptions, transmitting only arguments consistent with the adopted description. Thanks to that by means of a malicious software run on the user equipment connected to the communication interface, it is not possible to mislead the user in regard to documents to be signed, because he has a possibility to verify the content or its hash on the user interface controlled by the control module placed in the secured part, isolated by the hardware filter. Even in the situation, if the integrated circuit infected by hardware Trojan being able to send the user's secret would have been found on the secure side, the hardware filter will prevent a free transfer of secret.

Advantageously, the hardware operation filter is realized in a system of a field-programmable gate array (FPGA). Such solution provides good instruction processing speed, hard to be obtained in general software. Alternatively, a dedicated ASIC system can be provided.

Advantageously, the hardware filter and the communication interface are built-in in one system on a chip (SoC), including a part of a field-programmable gate array (FPGA) and a part of a hardprocessor system (HPS), wherein the communication interface with the server is implemented in a part of the hard processor system whereas the hardware operation filter is implemented in a part of the field-programmable gate array.

Advantageously, the cryptographic processor is implemented in the said field-programmable gate array. In such configuration it is easier to miniaturize the device.

Advantageously the user interface includes a display and input means, which advantageously include keys.

Alternatively, input means include a biometric device such as a fingerprint reader or a retina or fundus scanner.

A method of realization of cryptographic operation with a cryptographic device connected to a user equipment, in which cryptographic device receives control commands from the user equipment, according to the invention is specific in that the cryptographic device constitutes the cryptographic device according to the invention. Server of the communication interface, receives control commands from the user equipment and executes said control commands by sending to the control module via the hardware filter instructions comprising operation codes (opcodes) chosen form a pre-defined set of operation codes with the description of arguments corresponding to the pre-defined description of arguments and then the arguments according to the previously sent description.

A computer program product suitable for being executed on a cryptographic device, according to the invention is characterized in that it comprises the set of instructions, which once executed realize the method according to the invention. Various services realizing miscellaneous cryptographic operations may be run in the form of applications on the server of the communication interface of the cryptographic device. Thanks to such configuration, the device constitutes a universal and safe cryptographic platform.

### Description of drawings

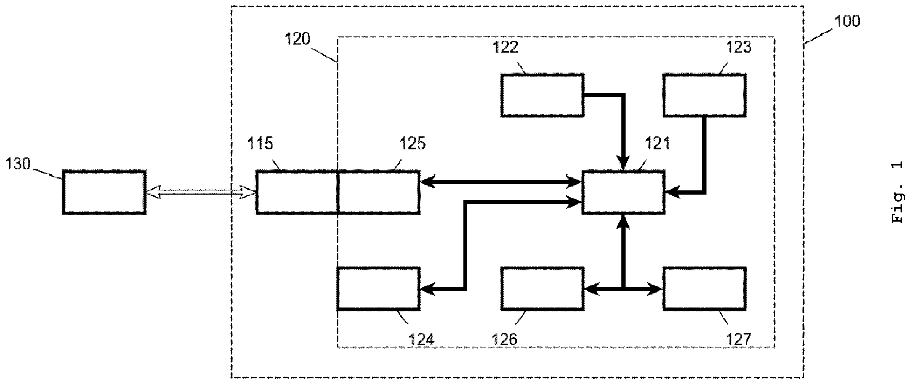

The embodiment of the invention was presented below with reference to the drawing, in which Fig. 1 presents a flowchart of the platform according to the invention.

### Embodiments of the invention

A flowchart of the cryptographic device **100** according to the embodiment of the invention was presented in Fig. 1. The cryptographic device **100** is suitable for a communication with the external user equipment **130** by means of the communication interface **115.** In the cryptographic device **100** a secured part **120** was separated, which cannot communicate with the external user equipment **130** otherwise than through the hardware filter **125.**

The communication interface **115** and the hardware filter **125** were implemented by a single unit of system on a chip type (SoC) Intel FPGA SoC Cyclone V 5CSXFC6D6F31C6N, including a part of a hardprocessor (HPS) and a part of a field programmable gate array (FPGA). In a part of the hardprocessor a server suitable for communication with physical interfaces - wired and wireless - was implemented. Thanks to that the platform - the cryptographic device **100** can communicate with various user equipment **130,** in particular computers and mobile user equipment as mobile phones, smartphones or tablets.

Alternatively, a pair of systems may be used: separate ARM/x86 for implementation of communication interface **115** with the server and an ordinary system FPGA/ASIC for realization of the hardware filter **125.**

A cryptographic processor **124** was implemented in the same system of the field programmable gate array, in which the hardware filter **125** was implemented. Alternatively a separate system can be used to implement the cryptographic processor **124.**

A microcontroller with a secure memory **122** and peripheries **123** including a cryptographic card reader was used as a control module **121.** A communication with the user was provided by a display in a form of a touch screen **126** and an additional input interface **127** in a form of two keys.

The hardprocessor, in which the communication interface **115** including the server is implemented, communicates with the external user equipment **130.** The user operating the external device, operates applications run on the server of the communication interface **115.**

Signing or encrypting of digital data requires using of sub-assemblies of the device assigned to the secured part **120.** On the level of the program, the server of the communication interface **115** communicates with the control module **121.** The communication run however through the hardware filter **125** allowing only the closed catalogue of operations. Due to that, even though the elasticity of communication that is given by the standard server of communication interface **115** and the standard control module **121,** the secured part **120** is insensitive to attacks as a result of drastically reduced catalogue of operations.

The hardware filter **125** transmits only and exclusively authorized data format and operations, and it blocks the communication deviating from the accepted format, preventing attempts to compromise the device by "smuggling" of a malicious code in the arguments of the operations and the additional operations.

Due to the fast operation, the hardware filter **125** cannot be realized on a computer of general purpose. Realization in the FPGA systems proved to be sufficient. The hardware filter **125** has the same interface at the input as well as at the output. Filtering is realized by means of a state machine and the implemented list of operation codes authorized to be performed. Appearance of data on the output of the hardware filter **125** starts the verification process, in which in a state function, the hardware filter **125** analyzes and classifies the received data by establishing, whether they are still arguments of operation, or already another operation code and operation code with operation arguments is compared with the list of admissible operation codes. Both derogation in respect of operation code as well as in a format of arguments results in that the operation code will not be exposed on the exit.

An example of operation of the hardware filter **125** was described below on the example of data transmission in AXI4Stream format, encoded in the format [operation code, description of the arguments of operation, arguments of operation].

While waiting for instructions, the hardware filter **125** is checking a first part of data appearing on the input and verifies, whether the value of the bits responsible for the operation code is present on the list of admissible operations, realized as a look-up-table. The hardware filter **125** is transitioning into the state of data collection, the operation code is transferred to the output buffer. Then, the hardware filter **125** analyzes further parts of data appearing at the input, verifying the compliance of the input data with the previously adopted description of arguments. In a case of compliance, further data is added to the output buffer and after verification of all data, the operation code with arguments is exposed on the exit and transmitted to the microcontroller of the control module **121.**

Sole value of the operation code can be additionally translated into the other value in the hardware filter **125.** The translation of the operation code can be used for hiding the value of the operation codes at the secure side and for obstructing the reverse engineering of the sample of the device. Additionally, the translation of the operation code can be also justified in view of the improvements and development of the device while keeping the compatibility backward from the secure side and applying changes to the operation filter and the application programming interface (API) of the server. Thanks to that, with the small changes a recertification of the cryptoprocessor is not needed.

After receiving the command with arguments, a microcontroller **121** is calling the implemented function and is carrying out the activities required for realization of the cryptographic function by means of the cryptographic processor **124.**

An attempt to call an unacceptable function - for example a hidden function of the microcontroller or a function for reading the private key is connected with transmitting the command which is not in accordance with the table.

Then, the hardware filter **125,** being at the state of waiting for the instruction checks a first part of the data appearing on the input and verifies, whether the value of the bits responsible for the operation code is located on the list of admissible operations to be executed or it detects, that there is a lack of operation code transmitted to the input on the list of admissible operations and it rejects the given input package. Optionally, the signal indicating rejection of the package is transmitted to the control module **121,** which exposes the information on the display **126** informing the user about the potential risk. The hardware filter **125** waits for the further data portions and in a case of appearing of the new data package, it verifies its contests.

In the present embodiment, the instruction sent to the control module includes the operations represented by the data string sent between the server of the communication interface **115,** the hardware filter **125** and the control module **121.** This string is appropriately divided into parts and packaged in a specific format. The server of the communication interface **115** is sending already appropriately formatted data.

The first part of data comprises metadata concerning the whole string, written on the predefined bits, including: index of operation to be executed, the number and the length of arguments.

The hardware filter **125** on the basis of a first part of data verifies, whether the operation is admissible. It checks the value of the storing bits and operation code with cache base of pre-defined admissible operation codes and operations and description of arguments corresponding to them. Descriptions of the arguments in the base may have a certain degree of discretion. On that basis, it verifies whether on the next bits an appropriate number of arguments for given operation is written and if their lengths fall within the scope of admissible values. Then, the lengths of arguments are written to cache register and the filter counts data portions appearing on the input as parts of the arguments, by dividing them accordingly.

After receiving the number of bytes indicated in the first part (as a length of arguments), the hardware filter **125** treats such string of data as a correct string and transmits it as a whole to the control module **121.** It is also possible to use translation of operation codes, e.g. the operation code (opcode) is received, e.g. x6C4 and it replaces that operation code by other programmed one in the control module **121** for the given operation.

In a case, when an inadmissible operation code or arguments not in conformity with the description appears in the first part of data, the filter rejects that part. However, if in the further part (which would already be an argument) on the appropriate bites an admissible value appears, the filter will initially accept such operation, it will transfer it to the output buffer and it will start to collect data which are the arguments of the operation. Such approach allows for reducing the number of errors resulting from the breaks in data transmission. In a case, when arguments have inadmissible length, the hardware filter **125** erases the entire contents of the output buffer and it restarts the analysis of the input data.

The control module **121** manages the secured part **120,** it operates peripheries **123,** it displays data on the screen **126** and it operates the communication with the user guaranteeing him, that what he confirms to be signed is actually the content, which he was going to sign. The control module **121** manages also the access to the secure memory **122,** in which the main secret of the user is stored. The control module **121** receives pin from the user and reads the part of the key from the SmartCard, required to decrypt the main secret saved in the secure memory. Alternatively, instead of securing with a pin introduced by the user interface **126, 127,** it is possible to use a biometric device such as a fingerprint reader or a retina scanner. Both types of security means can be used, leaving the decision regarding their use to the user.

The cryptographic processor **124** receives commands from microcontroller, it realizes cryptographic functions such as calculation of the hash of the content to be signed, or realization of the signature.

On first start-up by the user, the cryptographic device **100** is subjected to the procedure of initialization, which takes into account two possibilities: initializing the new device - drawing a random sequence (main secret) by the cryptographic processor **124** and presenting it in a form of keywords or restoration of another device - entering the keywords, which are transformed into the binary string (main secret).

Then the main secret is secured (encrypted) with the pin code defined by the user or by biometric code. With the use of the PIN, the user may define only the PIN to the cryptographic device **100** or define both the PIN to the cryptographic device **100** as well as to the smart card with the encrypting key. In the second situation unblocking the device requires inserting the card and entering the PIN - thanks to that an additional safeguard is obtained and the absolute security of the stored main secret. Even after unauthorized entity would succeed in gaining a control of the communication interface **115,** the hardware filter **125** will prevent access to the user interface in the secure part **120.** As a consequence, it will not be possible to present to the user a falsified information about the document to be signed.

With each subsequent start-up of the cryptographic devise, the user has to unblock the device first, in a manner corresponding to the chosen method.

In a case of multiple entering of a wrong PIN, the secret is erased from the device. Decrypted secret is a seed to all other applications so at its basis, according to a method described in https://github.com/bitcoinbook/bitcoinbook/blob/develop/ch0 5.asciidoc#hd-wallets-bip-32bip-44 - paragraph bip32 and bip44 the keys are generated for other application, including the symmetric keys used for encrypting the certificates stored in the device.

Operation of the cryptographic device **100** is started with the activation and connecting to the external user device **130.**

The cryptographic device **100** generates a reminder to enter the PIN or to launch the biometric identification.

The user is placing the smart card in the reader and he enters the PIN or launch the biometric system.

After PIN verification, the cryptographic device **100** decrypts and places the main secret in the memory and launches the communication interface **115.**

The user launches the browser and he launches the application for signing in a window of the browser, it chooses the "identity" and it indicates the data to be signed or to encrypt. By means of the application and communication interface **115,** the data to be signed are sent to the cryptographic device **100.**

The server of the communication interface **115** in the unsecured part receives data from the user and it sends the message to the secure side. The message is subjected to the filtration by the hardware filter **125.** At the secure side, the hash is calculated from the data and the hash value is displayed on the screen **126.** It allows for verification by the user, whether the data intended for signing or encrypting was not compromised. The cryptographic device **100** is waiting for confirmation of the hash value by the user by pressing the button **127.**

In a secured part of the cryptographic device **100,** the key for signing with the chosen identity is generated from the main secret. Information about the identity is displayed on the screen **126.** The device is waiting for the confirmation of the chosen identity by the user by pressing the button **127.**

The digital signature or encryption is realized in the secured part **120** of the cryptographic device **100,** then it is transferred through the hardware filter **125** to the server of the communication interface **115,** from where the user downloads it to the external user device **130.**

At a moment, when the cryptographic device **100** is blocked, the main encrypted secret is stored in a secure memory **122.** After unblocking the cryptographic device **100,** the main secret is decrypted and according to needs of the user and application launched by him, particular keys and certificates are decrypted.

The user's data including the keys to be signed, certificates, encrypted by the means of the main secret or its derivative, are stored in the secure memory. Alternatively, they can be stored in the memory (not shown in the drawing) of the SoC system.

The cryptographic device **100** brings together all elements connected with the user identity at one place and it provides the functionalities of the set of cryptographic devices. Due to the easy extending of functionalities, the cryptographic device **100** can be adapted to cooperation with the infrastructure and solutions which are unique for the given country e.g. integration with governmental IT systems such as eKRS or Mobywatel in Poland. Integration with banking system is easy, and even storing the certificate included on the EPO smart card. The cryptographic device **100** enables simultaneous use of various keys, various types by the single user, as connection of the PGP and S/MIME keys.

The main secret of the user is secure, regardless of the type of the application which he uses, and simultaneously it is possible to add additional new data/keys/accounts. Extending functionality is possible at the untrusted side i.e. on the server of the communication interface **115,** whereas all operations affecting vulnerable data are realized at the secured side **120,** separated by the hardware filter **125.** Critical data are not and cannot be transferred by the hardware filter **125** beyond the secured part **120.**

Additional advantage of the invention is possibility to use of any integrated circuit. Even if the infected integrated circuit will be used, by a so-called hardware Trojan, i.e. additional commands provided by an unreliable producer, the hardware filter **125** will unable calling them. If in the separate cryptographic processor **124,** a hidden command "send keys" is provided, it will not be possible to be called from external and to receive the result of its operation. The vulnerable element is only the filter itself.

The method according to the invention can be executed in a whole or in a part on the server of the communication interface as a set of executable instructions constituting a computer program product. Those computer executed instructions can be represented in various forms including programs, procedures, objects, data structures, scripts and libraries executed on one or bigger number of the devices or on the virtual machines.

The above embodiments illustrate the invention and they do not limit its range defined by the attached patent claims. References to the drawing do not limit the scope of protection determined by the claims. Terms "comprise" and "include" in a context of executing the method does not mean, that the sequence of the steps or operations is determined as well as that there is a lack of other activities. The term "connected" in relation to the hardware sub-assemblies or virtual object does not exclude the connection by means of other sub-assemblies or virtual elements.

## Claims

1. A cryptographic device comprising a control module (**121**) having connected thereto a communication interface (**115**) for communication with an external user equipment (**130**), a secure memory (**122**), a cryptographic processor (**124**) and a user interface (**126, 127**), **characterized in that** the communication interface (**115**) includes a built-in server, whereas a connection of the communication interface (**115**) with the control module (**121**) is realized via a hardware operation filter (**125**) adapted to
transmit of operation codes only from a predefined set of operation codes,
receive descriptions of arguments of operations corresponding to predefined descriptions,
transmit only arguments consistent with the said received description.

2. Device according to claim 1, **characterized in that** the hardware operation filter (**125**) is realized in a system of a field-programmable gate array, FPGA.

3. Device according to claim 2, **characterized in that** the hardware filter (**125**) and communication interface (**115**) are built-in in one system on a chip, SoC including a part of a field-programmable gate array, FPGA and a part of a hard processor system, HPS, wherein the communication interface (**115**) with a server is implemented in the HPS whereas the hardware operation filter (**125**) is implemented in the FPGA.

4. Device according to claim 3, **characterized in that** the cryptographic processor is implemented in the said FPGA.

5. Device according to any of claims from 1 to 4, **characterized in that** the user interface comprises input means (**127**) and a display (**126**).

6. Device according to claim 5, **characterized in that** the input means (**127**) include keys.

7. Device according to claim 5, **characterized in that** input means (**127**) include a biometric device.

8. A method of realization of a cryptographic operation with a cryptographic device connected to a user equipment (**130**), wherein the cryptographic device receives control commands from the user equipment, **characterized in that** the cryptographic device is the cryptographic device (**100**) as defined in any of claims from 1 to 7, wherein the server of communication interface (**115**)
receives control commands from the external user equipment (**130**), and
executes said control commands by sending
adequate instructions comprising operation codes chosen form a pre-defined set of operation codes with a description of arguments corresponding to a pre-defined description of arguments, and then
arguments according to the said previously sent description
to the control module (**121**) via the hardware filter (**125**).

9. A computer program product suitable for being executed on a cryptographic device, **characterized in that** it comprises a set of instructions, which realizes once executed the method as definded in claim 8.
